# EUROPÄISCHE PATENTSCHRIFT

(11) **EP 0 876 249 B1**
(45) Veröffentlichungstag und Bekanntmachung des Hinweises auf die Patenterteilung: **01.08.2001**
(21) Anmeldenummer: 97902229.0
(22) Anmeldetag: 27.01.1997
(51) Int. Cl.: B29C 65/14, B29C 53/60, B29C 53/42, B31B 1/64, B31C 3/00

(54) **VERFAHREN ZUR HERSTELLUNG VON HÜLSEN AUS KARTONVERBUNDMATERIAL UND VORRICHTUNG ZUR DURCHFÜHRUNG DES VERFAHRENS**
PROCESS FOR PRODUCTION OF TUBES OUT OF COMPOSITE CARDBOARD AND DEVICE FOR CARRYING OUT THE PROCESS
PROCEDE POUR LA FABRICATION DE TUBES EN MATERIAU COMPOSITE CARTONNE ET DISPOSITIF POUR LA MISE EN OEUVRE DE CE PROCEDE

(30) Priorität: 27.01.1996 DE 19602892
(43) Veröffentlichungstag der Anmeldung: 11.11.1998
(73) Patentinhaber: WEIDENHAMMER PACKUNGEN KG GMBH & CO, D-68766 Hockenheim (DE)
(72) Erfinder: BENTZ, Hermann, D-67354 Römerberg (DE); FISCHER, Peter, D-68766 Hockenheim (DE); KÖSSENDRUP, Klaus, D-67105 Schifferstadt (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9700349
(87) Internationale Veröffentlichungsnummer: WO9727041

(56) Entgegenhaltungen:
- EP-A- 0 113 160
- EP-A- 0 437 847
- DE-A- 1 778 422
- DE-A- 2 157 951
- DE-A- 2 313 120
- DE-A- 2 749 202
- DE-B- 1 104 315
- DE-U- 9 102 388
- FR-A- 1 577 304
- US-A- 2 145 636
- US-A- 2 358 455
- US-A- 2 915 952
- US-A- 2 953 976
- US-A- 3 183 802
- US-A- 3 189 702
- US-A- 3 673 033
- US-A- 3 716 435
- US-A- 4 156 626
- US-A- 4 243 454

## Beschreibung

Die Erfindung betrifft ein Verfahren mit den Merkmalen des Oberbegriffs des Anspruchs 1 sowie eine Vorrichtung zur Durchführung des Verfahrens mit den Merkmalen des Oberbegriffs des Anspruchs 5. Ein Verfahren und eine Vorrichtung dieser Art sind in EP 0 113 160 beschrieben.

Kartonverbunddosen bestehen in der Regel aus einer Hülse aus mehrschichtigen Verbund, einem auf die eine Stirnseite der Hülse aufgesetzten Boden und einem Deckel. An der Dekkelseite ist bei flüssigkeits- und aromadichter Ausführung eine Verschlußmembran aufgesiegelt.

Die Zusammensetzung des Verbundmaterials richtet sich nach dem Füllgut und den gegebenen Festigkeitsanforderungen. Bei einer flüssigkeitsdichten Ausführung weist die Hülse wenigstens eine Papierschicht auf, an deren Innenseite eine metallische Sperrschicht, in der Regel eine Aluminiumfolie angeordnet ist, die wiederum mit einer Polymerschicht kaschiert ist. Auf dieser Hülse ist außenseitig wenigstens eine weitere, in der Regel dickere Kartonschicht, der sogenannte Schrenz, angeordnet und auf dieser schließlich eine das Etikett bildende Papierbahn angeordnet. Diese Hülsen sind als Wickelhülsen ausgebildet die von einem schraubenförmig endlos hergestellten Wickelrohr abgelängt werden.

Bei der Herstellung einer Wickelhülse läuft das Verbundmaterial als Endlosbahn unter einem der Steigung des schraubenförmigen Wickels entsprechenden Winkel auf einen Wickeldorn auf. Entlang einer Längskante der Endlosbahn wird ein Randstreifen mit dem darunter liegenden Randstreifen des bereits auf dem Wickeldorn befindlichen Abschnittes der Endlosbahn verklebt. Eine solche Wickelhülse genügt erhöhten Anforderungen an die Gasdichtheit nicht. Auch leidet die Haltbarkeit der Verbunddose bei feuchter Atmosphäre. Der Grund liegt darin, daß die außen und die innen liegende Längskante eine offene Schnittfläche bilden, so daß Diffusionsvorgänge über die Schnittflächen durch die Papier- bzw. Kartonschicht hindurch stattfinden können. Die Dose ist weder gas- noch druckdicht. Durch eindiffundierende Feuchtigkeit kann es zum Aufquellen des Papiers bzw. Kartons und zum Delaminieren kommen.

Diese Diffusionsvorgänge können durch eine sogenannte Anakonda-Naht ausgeschaltet werden. Bei diesem Verfahren wird die Endlosbahn entlang derjenigen Längskante, die später an der fertigen Wickelhülse an der Innenseite liegt, zu einem doppellagigen Randstreifen nach außen umgelegt (US 3 716 435, EP 0 113 160). Die gegenüberliegende, unverformte Längskante wird erhitzt, so daß die Polymerschicht in einem Randstreifen schmilzt. Beim schraubenförmigen Wickeln mittels einer Wickeleinrichtung läuft dieser erhitzte Randstreifen auf die äußere Schicht der Doppellage an der anderen Längskante auf und seine innen liegende erhitzte Polymerschicht verschweißt mit der außen liegenden Polymerschicht an der Doppellage. Auf diese Wickelhülse wird dann wenigstens eine weitere Kartonschicht aufgewickelt. Damit sind Diffusionsvorgänge von innen nach außen oder umgekehrt ausgeschlossen, da die Hülse innenseitig keine freien Schnittfläche, sondern eine durchgehend geschlossene Polymerschicht aufweist. Die Dichtheit einer solchen Wickelhülse hängt dann im wesentlichen nur noch von der Qualität der Schweißnaht ab.

Für das Verschweißen der Polymerschichten scheidet das an sich günstige, weil sehr gut steuerbare Hochfrequenzschweißen wegen der eingelagerten Aluminiumfolie aus. Es wird deshalb bis heute ausschließlich Heißluft verwendet, die mittels Düsen auf die Nahtstelle transportiert wird (US 3 716 435, EP 0 113 160). Damit ist aber eine nur sehr schlechte lokale Temperatur- Konzentrierung möglich. Die Heißluft wird beim Aufprall auf die Endlosbahn auch zur Seite hin abgelenkt, so daß ein relativ breiter Streifen erhitzt wird. Auch muß beim Schraub- oder Spiralwickeln die Heißluft von unten her auf die Endlosbahn unmittelbar vor deren Auflauf auf den Wickeldorn aufgeblasen werden, wodurch das Auswandern von Wärme in Nachbarbereiche noch verstärkt wird. Es schmilzt folglich die Polymerschicht nicht nur an der gewünschten Nahtstelle, sondern auch im Randbereich. Schließlich läßt sich die Temperatur an der Naht nur schlecht steuern, so daß die Polymerschmelze unter Umständen zu stark erweicht und auswandert, gegebenenfalls auch auf den Wickeldorn gelangt und dort haften bleibt. Ähnliche Verhältnisse ergeben sich bei einer Erhitzung durch Infrarot-Strahlung, wobei auch hier eine nur unzulängliche Temperatursteuerung möglich ist. Im übrigen nimmt die Endlosbahn auf einem zu großen Bereich zuviel Wärme auf und die Schweißnaht kühlt dann zu langsam ab. Aufgrund des mangelhaften Wärmetransportes und seiner schlechten Steuerungsmöglichkeit ist die Bahngeschwindigkeit begrenzt und damit die Leistung, d.h. die pro Zeiteinheit herstellbare Anzahl von Hülsen begrenzt. Schließlich ist der Energiebedarf aufgrund der starken Wärmestreuung und Wärmeverluste erheblich.

Es ist weiterhin bekannt, thermoplastische Kunststoffe oder thermoplastisch beschichtete Verbundmaterialien durch fokussierte Wärmestrahlung zu verbinden, wodurch eine bessere Energiebilanz erreicht wird. So ist es bei Kartonschachteln bekannt (US 4 156 626), eine der Boden- oder Decklaschen, die innenseitig mit einem Polymer beschichtet und beim Transport etwa senkrecht aufgestellt sind, mittels einer Lichtquelle, deren Strahlung punktförmig fokussiert ist, zu beaufschlagen. Der Strahlungsfokus wird auf die Polymerschicht ausgerichtet. Beim Vorbeitransport der Schachteln wird ein Streifen der Polymerschicht aufgeschmolzen. Anschließend wird die Boden- oder Deckellasche auf die andere Lasche umgelegt und mit dieser durch den schmelzflüssigen Streifen verbunden.

Bei Verpackungen aus einem Verbundmaterial soll die Schnittkante durch eine Folie aus Kunststoff abgedeckt werden (EP 0 437 847). Das Verbundmaterial besteht aus einer einseitig thermoplastisch beschichteten Karton- oder Papierschicht, einer Aluminiumsperrschicht und einer thermoplastischen Folie auf der anderen Seite. Die thermoplastische Folie überragt die Schnittkante des Verbundmaterials und wird um diese Kante herumgelegt und auf der gegenüberliegenden Seite mit dem Verbundmaterial verbunden. Die punktförmig fokussierte IR-Strahlung wird auf die thermoplastische Beschichtung des Verbundmaterials ausgerichtet, um dieses zu erschmelzen. Nach dem Umlegen der überstehenden Folie wird die Wärme an die Folie abgegeben und soll diese mit dem Verbundmaterial versiegelt werden. Dabei ist es ferner bekannt, das Verbundmaterial an der zu erwärmenden Stelle mit einem lichtabsorbierenden dunklen Streifen zu beschichten. Bei diesem Verfahren wird besonderer Wert darauf gelegt, daß die Folie und die Aluminiumschicht nicht vor dem Umlegen durch die Strahlungsquelle beeinflußt wird.

Ausgehend von einem Verfahren nach dem Oberbegriff des Anspruchs 1 liegt der Erfindung die Aufgabe zugrunde, eine einwandfreie, scharf abgegrenzte Schweißnaht bei gleichzeitiger Reduzierung der für den Schweißvorgang notwendigen Energie zu erzielen.

Diese Aufgabe wird erfindungsgemäß dadurch gelöst, daß der Randstreifen von der die spätere Außenseite der Wickelhülse bildenden Seite her mittels parallel zu der ihn begrenzenden Längskante linienförmig fokussiertem Halogenlicht erhitzt wird.

Bei dem erfindungsgemäßen Verfahren hat sich überraschenderweise gezeigt, daß linienförmig fokussiertes Halogenlicht eine ausreichende Erhitzung der Polymerschicht eines Verbundmaterials ermöglicht. Dadurch wiederum wird die Möglichkeit geschaffen, aus einem Verbundmaterial Hülsen herzustellen, bei denen die Schweißnaht zwischen den einander überlappenden Längskanten der Wickelhülse sehr schmal ausgebildet werden kann und eine einwandfreie und dichte Verbindung herstellbar ist. Die Breite der Schweißnaht läßt sich durch entsprechende Fokussierung einstellen, die Schweißnaht also sehr genau definieren. Halogenstrahler sind bekanntermaßen außerordentlich preiswert und die Temperatur am Auftreffpunkt der Strahlung läßt sich sehr leicht regeln. Der Energieverbrauch ist gering. Da die Wärme im Bereich der Schweißnaht kaum auswandert, diese also schnell wieder auskühlt, lassen sich hohe Stückleistungen erreichen. Dies ist mit Heißluft nicht möglich, da die abzuführende Wärmemenge sehr groß ist. Dadurch, daß die Hitzeeinwirkung sehr genau auf die Schweißnaht begrenzt werden kann, wird die Polymerschicht neben der Schweißnaht nicht beeinträchtigt oder gar beschädigt. Diese Vorteile werden insbesondere dadurch wirksam, daß die Endlosbahn von der Außenseite, also der Papierseite her bestrahlt wird. Da in der Regel Recycling- Papier verwendet wird, das demzufolge eine graue oder braune Farbe hat, wirkt die Papierschicht als schlechter Wärmestrahler und schlechter Wärmeleiter, aber als guter Wärmespeicher. Die Wärme durchdringt das Papier und gelangt auf die Aluminiumfolie, die die Wärme aufgrund ihrer guten Leitfähigkeit an die Polymerschicht unmittelbar weitergibt und diese zum Schmelzen bringt. Die seitliche Wärmeausbreitung ist nur sehr begrenzt, so daß die Temperatur zur Seite hin schnell abfällt und der Schweiß- bzw. Siegelnahtbereich eng eingegrenzt ist. Die Speicherwirkung der Papierschicht reicht aus, um bis zum Schließen der Naht noch ausreichend Wärme an die Polymerschicht abzugeben.

Eine weitere Verbesserung der Energieausbeute bzw. Einsparung an Energie und eine zugleich bessere Konzentrierung der zugeführten Wärme auf den Schweißnahtbereich, ergibt sich dann, wenn die Endlosbahn zumindest auf der dem Halogenlicht zugekehrten Seite wenigstens innerhalb des zu erhitzenden Randstrefens mit einer lichtabsorbierenden Schicht versehen wird.

Diese lichtabsorbierende Schicht kann auf einer der Breite der Schweißnaht entsprechenden Breite aufgebracht werden. Dadurch wird die Umwandlung der Lichtenergie in Wärmeenergie im Bereich der Schweißnaht zusätzlich verbessert.

Vorzugsweise ist die lichtabsorbierende Schicht eine dunkle, vorzugsweise schwarze Farbspur. Diese stört deshalb nicht, weil sie später durch die äußere Kartonschicht abgedeckt wird.

Die Erfindung betrifft ferner eine Vorrichtung mit den Merkmalen des Oberbegriffs des Anspruchs 5 zur Herstellung von Wickelhülsen. Eine solche Vorrichtung zeichnet sich erfindungsgemäß dadurch aus, daß die Heizeinrichtung eine parallel zu der unverformten Längskante fokussierte, linienförmige Halogenlichtquelle ist, die Halogenlichtquelle oberhalb der zulaufenden Endlosbahn angeordnet ist.

Bei einer solchen Vorrichtung kann ferner vorgesehen sein, daß vor dem Wickeldorn eine Einrichtung zum Aufbringen einer dunklen Farbspur auf der Oberseite der zulaufenden Endlosbahn angeordnet ist. Stattdessen kann natürlich die Endlosbahn auch schon anläßlich ihrer Herstellung mit einer solchen Farbspur versehen sein.

Die Vorrichtung weist ferner, wie im Stand der Technik bekannt, wenigstens eine Einrichtung zum abschließenden Aufwickeln einer Kartonbahn auf die Wickelhülse auf. Je nach Festigkeitsanforderungen können auch zwei oder mehr Kartonbahnen außenseitig aufgewickelt werden.

Nachstehend ist die Erfindung anhand von in der Zeichnung dargestellten Ausführungsbeispielen beschrieben. In der Zeichnung zeigen:
- Figur 1: einen Längsschnitt durch die Wandung der Hülse einer Kartonverbunddose;
- Figur 2: das Detail II in Figur 1 in vergrößertem Maßstab;
- Figur 3: eine schematische perspektivische Darstellung einer Vorrichtung zur Herstellung einer spiralig gewickelten Hülse;
- Figur 4: eine schematische Darstellung einer abgewandelten Ausführungsform der Vorrichtung nach Figur 3.

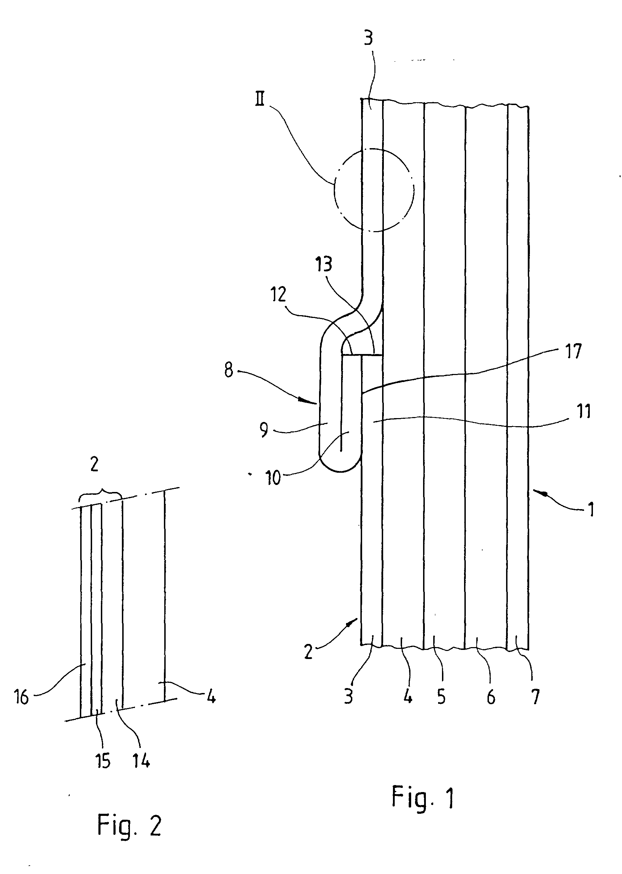

In Figur 1 ist der Querschnitt der Wandung einer Hülse 1 einer Kartonverbunddose in stark vergrößertem Maßstab gezeigt. Die Hülse 1 kann einen kreisförmigen, ovalen oder mehr oder minder rechteckigen Querschnitt mit abgerundeten Ecken aufweisen. Man spricht dann von runden oder unrunden Dosen. Der Schichtenaufbau der Wandung der Hülse 1 richtet sich im wesentlichen nach der Art des Füllgutes und der geforderten Stabilität.

Bei dem in Figur 1 gezeigten Ausführungsbeispiel weist die Hülse 1 von innen nach außen eine gas- und flüssigkeitsdichte Innenschicht 2 und drei aufeinanderfolgende Kartonschichten 4, 5 und 6 sowie eine äußere Papier- oder Kunststoffolienschicht 7 auf, wobei letztere bedruckt oder bedruckbar ist und ein Etikett bildet. Die Hülse 1 gemäß Figur 1 wird durch Wickeln aus einer Endlosbahn 3 hergestellt, so daß beispielsweise die Innenschicht 2 aus schraubenförmig nebeneinander liegenden Bahnen 3 besteht, die sich im Bereich 8 überlappen. Dabei ist die eine Längskante der Bahn 3 zur Doppellage unter Bildung der inneren Lage 9 und der äußeren Lage 10 nach außen umgelegt und mit dem unverformten Randstreifen 11 der benachbarten Lage der Bahn 3 verbunden, so daß die Schnittflächen 12, 13 der beiden Lagen der Bahn 3 abgedeckt sind. In gleicher Weise sind die Kartonbahnen 4, 5 und 6 und gegebenenfalls auch die Papierbahn 7 auf die Innenschicht 2 schraubenförmig aufgewickelt. Bei den Schichten 4, 5, 6 und 7 ist eine Verwahrung der Schnittstellen, wie bei der Innenschicht 2, entbehrlich.

Wie Figur 2 zeigt, besteht die Innenschicht 2 aus einer äußeren Papierschicht 14, einer daran nach innen anschließenden metallischen Schicht 15, z.B. aus einer Aluminiumfolie, und einer innen liegenden Schicht 16 aus einem Polymer, z.B. Polypropylen. Diese Polymerschicht 16 erfüllt einerseits beim Abfüllen von Nahrungsmitteln die lebensmittelhygienischen Anforderungen, andererseits sorgt sie in Verbindung mit der metallischen Schicht 15 für die notwendige Flüssigkeits- und Gasdichtheit. Aus diesem Grunde ist die die Innenschicht 2 bildende Bahn 3, wie mit Bezug auf Figur 1 beschrieben, im Überlappungsbereich an einer Längskante zur Doppellage umgelegt und werden die dort aufeinanderliegenden Polymerschichten 16 zur Bildung einer gas- und flüssigkeitsdichten Naht 17 thermisch verschweißt.

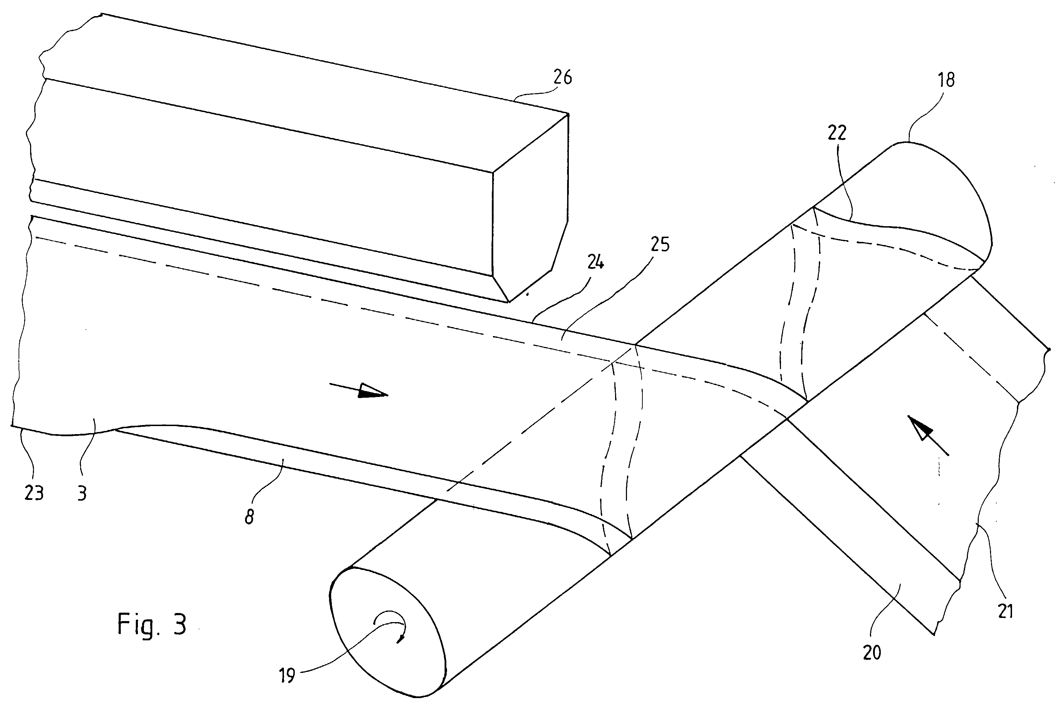

In Figur 3 sind die wesentlichen Teile einer Vorrichtung zur Herstellung der Wickelhülse 1 gemäß Figur 1 gezeigt. Die Vorrichtung weist einen Wickeldorn 18 auf. Von der einen Seite des Wickeldorns läuft die die Innenschicht 2 bildende Endlosbahn 3 zu, die von einer auf einer Haspel gelagerten Spule abgezogen wird. Von der anderen Seite des Wickeldorns werden die die Kartonschichten 4, 5 und 6 sowie die äußere Papierschicht 7 bildenden Endlosbahnen zugeführt, wobei nur zwei Endlosbahnen 20, 21 angedeutet sind. Diese Endlosbahnen werden bereits einander überlappend dem Wickeldorn 18 zugeführt. Die Endlosbahnen 3, 20, 21 laufen bezüglich der Achse des Wickeldorns 18 unter dem Steigungswinkel der zu erzeugenden, schraubenförmigen Wickelhülse 22 zu. Die Wickeltechnik als solche ist bekannt (z.B. US 3 716 435), weshalb auf die Erläuterung von Einzelheiten verzichtet werden kann.

Die die Innenschicht 2 bildende Endlosbahn 3 wird an ihrer in der Zeichnung vorne liegenden Längskante 23 nach oben zur Doppellage 8 umgelegt, während die gegenüberliegende Längskante 24 unverformt bleibt. Oberhalb dieser Längskante 24 bzw. eines daran anschließenden Randstreifens 25 ist ein Halogenstrahler 26 angeordnet, dessen Lichtstrahlung linienförmig auf den Randstreifen 25 fokussiert ist. Dieses Halogenlicht wird in dem die Endlosbahn 3 bildenden Verbundmaterial in Wärme umgesetzt, so daß die an der Unterseite befindliche Polymerschicht schmilzt. Sie läuft auf den Wickeldorn 18 auf die Doppellage 8 des dort bereits abgelegten Abschnittes der Endlosbahn auf, so daß die erhitzte und aufgeschmolzene Polymerschicht an der Unterseite des Randstreifens 25 mit der obenliegenden Polymerschicht der Doppellage 8 an der gegenüberliegenden Längskante 23 verschweißt. Die Wärmezufuhr beschränkt sich weitgehend auf den Randstreifen 24 und damit auf die Schweiß- bzw. Siegelnaht. Die Temperatur läßt sich durch Verwendung des Halogenstrahlers 26 sehr gut steuern, so daß auch eine schnelle Abkühlung der Nahtstelle beim weiteren Wickelvorgang stattfindet. Es lassen sich folglich hohe Bahngeschwindigkeiten bei der Herstellung der endlosen Wickelhülse 22 fahren. Von dieser endlosen Wickelhülse wird dann die Hülse für die Dose abgelängt.

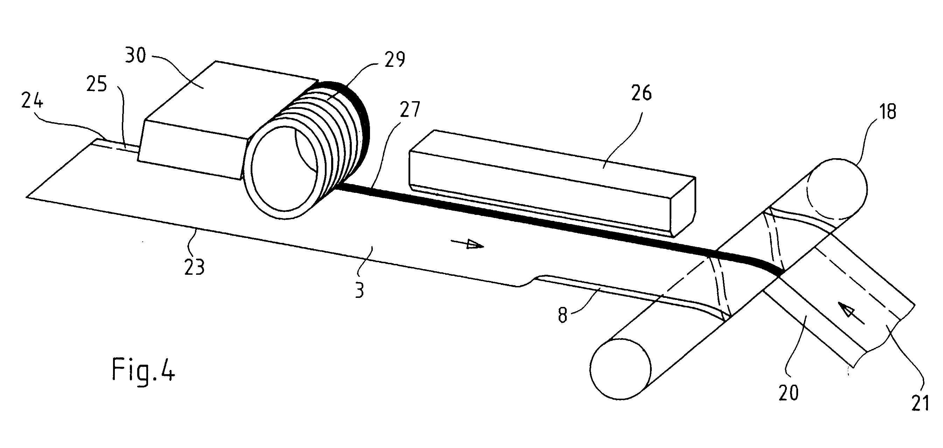

Eine Verbesserung der Temperaturführung und der Umsetzung der Strahlung des Halogenstrahlers 26 in Wärme läßt sich noch dadurch erreichen, daß auf der Oberseite des Randstreifens 25 eine dunkle, z.B. schwarze Farbspur 27 aufgebracht wird (Fig. 4), die etwa der Breite des Randstreifens 25 entspricht oder aber schmäler ist. Dadurch wird ferner die Konzentrierung der Wärme auf den Randstreifen 25 unterstützt. Diese Farbspur 27 kann mit einem dem Halogenstrahler 26 vorgeschalteten Sprühgerät oder einem Druckaggregat 28 mit einer Druckwalze 29 und einem Farbkasten 30 auf den Randstreifen 25 aufgetragen werden.

## Patentansprüche

1. Verfahren zur Herstellung der Hülse (1) von gasdichten Dosen aus Verbundmaterial, die von außen nach innen wenigstens eine Papier- oder Kartonschicht (4,5,6), eine metallische Sperrschicht und eine diese abdeckende, dem Füllgut zugewandte Polymerschicht (2) aufweist, indem eine Endlosbahn (3) aus dem Verbundmaterial an einer Längskante (8) zu einem doppellagigen Randstreifen (9, 10) umgelegt, die Endlosbahn (3) auf einem Randstreifen entlang der gegenüberliegenden Längskante (24) unter Aufschmelzen der Polymerschicht erhitzt, und anschließend auf einem Dorn (18) schraubenförmig zur Bildung eines Wickelrohrs (22) aufgewickelt wird, wobei der erhitzte Randstreifen (25) auf die außenseitige Polymerschicht des doppellagigen Randstreifens eines auf dem Dorn bereits abgelegten Bahnabschnitts überlappend aufläuft und mit diesem durch Verschweißen der Polymerschichten miteinander verbunden wird und anschließend wenigstens eine weitere Papier- oder Kartonschicht (20, 21) auf die Außenseite überlappend aufgelegt und randseitig verklebt wird, dadurch gekennzeichnet, daß der Randstreifen (25) von der die spätere Außenseite der Wickelhülse (21) bildenden Seite her mittels parallel zu der ihn begrenzenden Längskante linienförmig fokussiertem Halogenlicht (26) erhitzt wird.

2. Verfahren nach Anspruch 1, dadurch gekennzeichnet, daß die Endlosbahn (3) zumindest auf der dem Halogenlicht (26) zugekehrten Seite wenigstens innerhalb des zu erhitzenden Randstreifens (25) mit einer lichtabsorbierenden Schicht (27) versehen wird.

3. Verfahren nach Anspruch 1 oder 2, dadurch gekennzeichnet, daß die lichtabsorbierende Schicht (27) auf einer der Breite der Schweißnaht entsprechenden Breite aufgebracht wird.

4. Verfahren nach Anspruch 2 oder 3, dadurch gekennzeichnet, daß als lichtabsorbierende Schicht eine dunkle, vorzugsweise schwarze Farbspur (27) aufgebracht wird.

5. Vorrichtung zur Durchführung des Verfahrens nach einem der Ansprüche 1 bis 4 mit einem Wickeldorn (18), dem eine Endlosbahn aus dem Verbundmaterial mittels einer Wickeleinrichtung unter dem Steigungswinkel der schraubenförmigen Wickelhülse (1) zugeführt wird, einer vor dem Wickeldorn (18) angeordneten Einrichtung zum Umlegen der Endlosbahn zu einem doppellagigen Randstreifen (8) entlang der dem Wickeldorn zugekehrten Längskante und einer vor der Auflaufstelle der Endlosbahn (3) auf den Wickeldorn (18) angeordneten Heizeinrichtung (26) zum Aufschmelzen der Polymerschicht auf einem Randstreifen (25) entlang der gegenüberliegenden, unverformten Längskante (24) der Endlosbahn, dadurch gekennzeichnet, daß die Heizeinrichtung eine parallel zu der unverformten Längskante (24) fokussierte, linienförmige Halogenlichtquelle (26) ist, dieoberhalb der zulaufenden Endlosbahn (3) angeordnet ist.

6. Vorrichtung nach Anspruch 5, dadurch gekennzeichnet, daß vor dem Wickeldorn (18) eine Einrichtung (27) zum Aufbringen einer lichtabsorbierenden Schicht, z.B. einer dunklen Farbspur, auf der Oberseite der zulaufenden Endlosbahn angeordnet ist.

7. Vorrichtung nach Anspruch 6, dadurch gekennzeichnet, daß die Einrichtung ein Sprühgerät oder Druckaggregat (27) ist.

## Revendications

1. Procédé de fabrication du corps tubulaire (1) de boîtes étanches au gaz en matériau composite, présentant de l'extérieur vers l'intérieur au moins une couche (4,5,6) en papier ou en carton, une couche isolante métallique et une couche en polymère (2) recouvrant cette dernière, tournée vers le matériau de remplissage, dans lequel on plie une feuille continue (3) de matériau composite sur une arête longitudinale (8) pour obtenir une bande de bordure (9,10) à deux couches, on chauffe la feuille continue (3) sur une bande de bordure le long de l'arête longitudinale (24) opposée en faisant fondre la couche de polymère, et on l'enroule ensuite en spirale sur un mandrin (18) pour former un tube enroulé (22), la bande de bordure (25) chauffée montant à recouvrement sur la couche de polymère extérieure de la bande de bordure à deux couches d'une section de feuille déjà posée sur le mandrin et étant reliée à celle-ci par soudage des couches de polymère, au moins une autre couche (20,21) de papier ou de carton étant ensuite posée à recouvrement sur la face extérieure et collée sur le bord, caractérisé en ce que la bande de bordure (25) est chauffée en partant du côté qui formera la face extérieure du tube enroulé (21) par la lumière d'une source halogène (26) focalisée en ligne parallèlement à l'arête longitudinale qui la borde.

2. Procédé selon la revendication 1, caractérisé en ce que la feuille continue (3) comporte au moins sur la face en regard de la lumière de la source halogène (26) au moins à l'intérieur de la bande de bordure (25) à chauffer, une couche (27) absorbant la lumière.

3. Procédé selon la revendication 1 ou 2, caractérisé en ce que la couche absorbant la lumière (27) est appliquée sur une largeur correspondant à la largeur du joint de soudure.

4. Procédé selon la revendication 2 ou 3, caractérisé en ce que l'on applique comme couche absorbant la lumière une ligne (27) de couleur sombre, de préférence noire.

5. Ensemble pour réaliser le procéder selon l'une quelconque des revendications 1 à 4 comprenant un mandrin (18) auquel on amène une feuille continue de matériau composite au moyen d'un dispositif d'enroulement sous l'inclinaison du filetage du tube enroulé (1) en spirale, un dispositif disposé devant le mandrin d'enroulement (18) pour plier la feuille continue en une bande de bordure (8) à deux couches le long de l'arête longitudinale en regard du mandrin d'enroulement et un dispositif de chauffage (26) disposé devant la zone de montée de la feuille continue (3) sur le mandrin d'enroulement (18) pour faire fondre la couche de polymère sur une bande de bordure (25) le long de l'arête longitudinale (24) de la feuille continue opposée, non déformée, caractérisé en ce que le dispositif de chauffage consiste en une source de lumière halogène (26) linéaire focalisée parallèlement à l'arête longitudinale (24) non déformée, disposée au-dessus de la feuille continue (3) amenée.

6. Ensemble selon la revendication 5, caractérisé en ce qu'est disposé devant le mandrin d'enroulement (18) un dispositif (27) d'application d'une couche absorbant la lumière, par exemple une ligne de couleur sombre, sur la face supérieure de la feuille continue amenée.

7. Ensemble selon la revendication 6, caractérisé en ce que le dispositif consiste en un appareil de pulvérisation ou une unité d'impression (27).

## Claims

1. Method for the manufacture of the gas-tight composite material can sleeve (1), which from the outside to the inside has at least one paper or cardboard layer (4, 5, 6), a metallic barrier layer and a polymer layer (2) covering the latter and facing the filling product, in that a continuous composite material web (3) is folded back on one longitudinal edge (8) to a double layer marginal strip (9, 10), the web (3) is heated on a marginal strip along the facing longitudinal edge (24), accompanied by the melting of the polymer layer and is subsequently wound helically onto a mandrel (18) for forming a winding core (22), the heated marginal strip (25) running up in overlapping manner on the outside polymer layer of the double-layer marginal strip of a web portion already placed on the mandrel and is connected thereto by welding together the polymer layers and subsequently at least one further paper or cardboard layer (20, 21) is placed in overlapping manner on the outside and is marginally bonded, characterized in that the marginal strip (25) is heated from the sides forming the subsequent outside of the winding core (22) by means of halogen light (26) linearly focussed parallel to the longitudinal edge bounding the same.

2. Method according to claim 1, characterized in that at least on the side facing the halogen light (26), the web is provided with a light-absorbing layer (27) at least within the marginal strip (25) to be heated.

3. Method according to claim 1 or 2, characterized in that the light-absorbing layer (27) is brought to a width corresponding to the weld width.

4. Method according to claim 2 or 3, characterized in that a dark, preferably black colour track (27) is applied as the light absorbing layer.

5. Apparatus for performing the method according to one of the claims 1 to 4 with a winding mandrel (18), to which is supplied a continuous composite material web by means of a winding device under the pitch angle of the helical winding sleeve (1), a device positioned upstream of the winding mandrel (18) for folding back the web to a double layer marginal strip (8) along the longitudinal edge facing the winding mandrel and a heating device (26) positioned upstream of the first point of contact of the web (3) with the mandrel (18) for melting the polymer layer on a marginal strip (25) along the facing, undeformed longitudinal edge (24) of the web, characterized in that the heating device is a focussed, linear halogen light source (26) parallel to the undeformed longitudinal edge (24) and which is located above the incoming web (3).

6. Apparatus according to claim 5, characterized in that upstream of the winding mandrel (18) is provided a device (27) for applying a light-absorbing layer, e.g. a dark colour track on the upper side of the incoming web.

7. Apparatus according to claim 6, characterized in that the device is a sprayer or printing unit (27).
